# EUROPEAN PATENT SPECIFICATION

(11) **EP 3 063 404 B1**
(45) Date of publication and mention of the grant of the patent: **26.07.2017**
(21) Application number: 14790360.3
(22) Date of filing: 04.09.2014
(51) Int. Cl.: F03D 5/00, B64C 31/06, F03D 9/00

(54) **METHOD FOR SETTING UP AN ARC-TYPE WING**
VERFAHREN ZUR EINSTELLUNG EINES BOGENFLÜGELS
PROCÉDÉ D'AJUSTEMENT D'UNE AILE DE TYPE ARC

(30) Priority: 13.09.2013 IT TO20130751
(43) Date of publication of application: 07.09.2016
(73) Proprietor: Kite Gen Research S.R.L., 10099 San Mauro Torinese (TO) (IT)
(72) Inventor: IPPOLITO, Massimo, I-10099 San Mauro Torinese (TO) (IT)
(74) Representative: Garavelli, Paolo
(86) International application number: PCT/IT2014/000232
(87) International publication number: WO 2015/037025

(56) References cited:
- WO-A1-2009/035492
- WO-A2-2007/135701
- GB-A- 2 469 740

## Description

The present invention deals with a method for setting up an arc-type wing. WO2007/135701 discloses an automatic control process for the flight of kites and is regarded as the closest prior art. In particular, the invention deals with a method for real-time measuring distances connected to a system for correcting the attitude of an arc-type wing as defined by the steps of claim 1. An arc-type wing falls within the systems for extracting energy from wind through ultra-light wings, with high aerodynamic efficiency, subjected to high wing loads, under tension-structure mode.

An arc-type wing is subjected only to pure tensional forces, generating an aerodynamic lift useful, at the same time, both for keeping its own shape and for generating energy.

The terms used in this document have the following meaning.

*Angle of Attack:* is the angle between the wing chord of any aerodynamic profile and the apparent wind. For an arc-type wing, the global angle of attack is generally deemed as the angle between apparent wind and mean line of aerodynamic chord profiles in the central bay section.

*Center of Pressure:* is the point in which all aerodynamic forces generated by an aerodynamic profile can be deemed operating. For kites of an arc-type wing, the center of pressure if at the 10-20% of the chord.

*Chord line:* is a line traced through the wing section from the front edge to the outlet edge.

*Lift to Drag ratio:* is the ratio between the lift forces and the resistance forces supported at a given wind speed.

*Load line:* for an arc-type wing, it is the line from end to end passing through the center of pressure of all sections composing the wing.

*Luffing:* it is the trend of the angle of attack of an arc-type wing to suddenly become negative.

*Resistance to stalling:* it is advisable that arc-type wings have a low stalling speed and that they can recover from a possible stall with minimum increase of apparent wind.

The shape of these wings is approximately semicircular in the plane perpendicular to the apparent wind direction.

The limits of the capability of an arc-type wing to respond to changes of apparent wind conditions have a great incidence on its functional usefulness, above all of its use in the energy field.

Such limits are: stalling, luffing and wing shoulder collapsing.

The problem of automatically real-time controlling a wing supported by wind is dealt with by US6260795, in which the use of piezoelectric sensors, actuators and software is disclosed, these being designed to imitate in real time, the reactions of aerodynamic bird-type flights under extreme wind conditions.

In view of this prior art, object of the present invention is proposing an arc-type wing capable of correcting its own attitude during a flight through a retro-actuated system.

In compliance with the present invention, said object is obtained by an arc-type wing with high aerodynamic efficiency, composed of a central arc section connected to pairs of bridles through a pair of shoulders, characterized in that a detecting system measures the difference of meaningful heights, to determine the wing shape in real time.

The above and other objects and advantages of the invention, as will result from the following description, are obtained by a method for setting up di an arc-type wing as claimed in Claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention, as appears from the enclosed claims.

The present invention will be better described by some preferred embodiments thereof, provided as a non-limiting example, with reference to the enclosed drawings, in which:
figure 1 shows an axonometric view of an arc-type wing equipped with panels with air brakes;
figure 2 shows an axonometric view of an arc-type wing equipped with fuselage-type tail planes;
figures 3a, 3b show a geometric configuration diagram of an arc-type wing in two time phases;
figures 4a, 4b, 4c show a diagram for real-tme measuring distances connected to a system for correcting the attitude of an arc-type wing of the invention;
figure 5 shows a diagram of a system or measuring the distance and for transmitting ultrasound signals through a RF module installed in panels on board the wing;
figure 6 shows an ultrasound sensor of the space type used in the measuring system of figure 6.

An arc-type wing 1 comprises control bridles 11, 12, connected in different points to drive the wing during its flight and check its angle of attack.

The arc-type wing 1 is composed of a central arc section 13 connected to the bridles 11, 12, through due arc sections 14 possibly extended with a tapered tangent section (not shown).

Each section composed of the arc 14 and possibly of its respective tapered tangent section makes a shoulder of the arc-type wing 1.

Each shoulder supports a panel 2 which comprises an air brake 21 composed of a flow deflector or spoiler. Each air brake 21 generates a resisting force allowing to introduce a yaw moment useful to restore the maneuver reactivity of the arc-type wing 1.

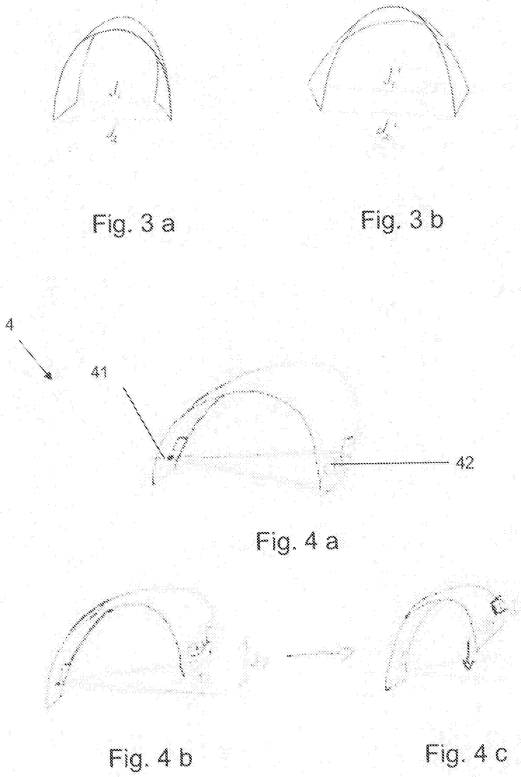

A optical system 4 comprises a micro-camera 41 and a target 42, respectively assembled on the pair of panels 2 (figures 4a, 4b, 4c).

The optical system 4 allows measuring in real time the difference of heights, d1-d1', d2-d2', of meaningful parameters for the shape variation of the wing 1 (figure 3).

This application has been devised to find relative displacements of the due shoulders and, through the use of the air brakes 21, to suitably correct the attitude of the arc-type wing 1 taking it bac under maximum efficiency conditions.

The micro-camera 41 assembled on one of the two panels 2 is aimed to the target 42 placed on the second panel 2. Through processing of data by a processor applied in the panel 2, the relative displacements d1-d1', d2-d2' are found, necessary to formulate the feedback command acting on the air brakes 21 in order to take back the wing 1 to its ideal configuration.

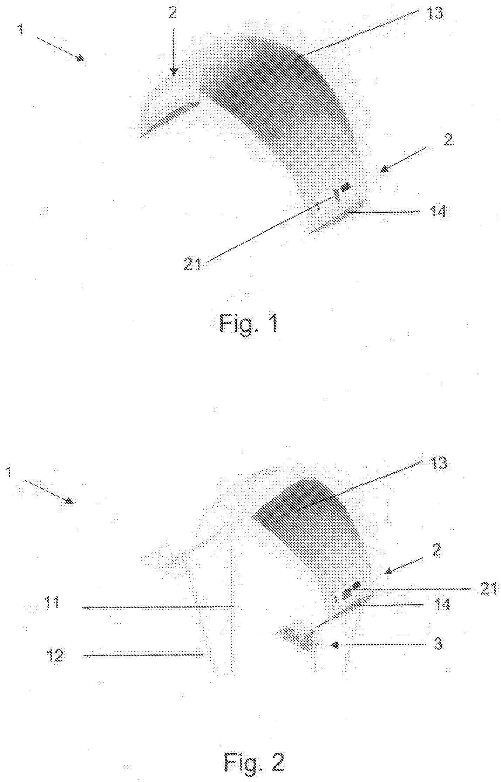

The optical system 4 allows maneuvering an arc-type wing 1 equipped with servo-assisted tail planes 3, by intervening on the angle of attack both of the central wing section 13, and of the two shoulders (figure 2). Through the optical system 4, a geometric measure is performed of the distance and of the parallelism of the shoulders, after which a pitch angle is imposed for every servo-assisted tail plane 3, obtaining the correct angle of attack of the central wing section 13, thereby performing the same function of the length change of the rear bridles. In the same way, a geometric measure is performed of the distance and of the parallelism of the shoulders, after which a roll angle is imposed for each servo-assisted tail plane 3, obtaining the correct angle of attack di each shoulder, allowing to modify the wing shape, thereby performing the same function of the asymmetrical or shape change of the arc-type wing 1.

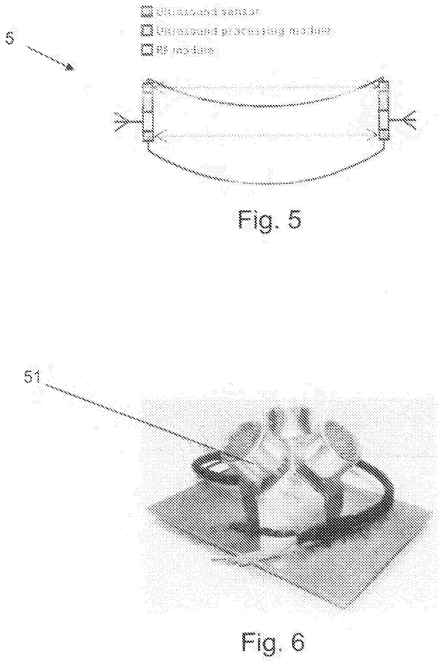

An alternative to the optical system 4 is given by a distance measuring module 5 based on the use of an ultrasound sensor 51 and y the transmission of ultrasound signals through a RF module installed in the panel 2 and ale to transmit and receive radio-frequency signals (figures 5, 6).

Both sensor 51 and RF module are installed in the respective panel 2.

## Claims

1. Method for real-time determining a shape of an arc-type wing (1) with high aerodynamic efficiency, said wing (1) being composed of a central arc section (13) connected to pairs of bridles (11, 12) through a pair of shoulders (14), and comprising a detecting system (4, 5) adapted to measure the difference of meaningful heights (d1-d1'), (d2-d2'), to determine in real time the shape of the wing (1), the detecting system (4, 5) being housed in panels (2) fastened to each shoulder (14), said method comprising the steps of:
- real-time measuring, through said detecting system (4, 5), the difference of heights (d1-d1'), (d2-d2') of meaningful parameters for the variation of the shape of the wing (1), said step of measuring being performed through aiming means (41) assembled on one of the due panels (2) and adapted to aim a target (42) placed on the secondo panel (2); and
- computing, through said difference, the relative displacements of the due shoulders (14) and, through the use of braking means (21), correcting the attitude of the arc-type wing (1) taking it back under maximum efficiency conditions, said braking means (21) generating a resisting force which allows introducing a yaw motion useful to restore the maneuver reactivity of the arc-type wing (1).

2. Method according to claim 1, **characterized in that** said detecting system (4, 5) maneuvers the arc-type wing (1), by intervening on the angle of attack both of the central wing section (13), and of the two shoulders (14), through the detecting system (4, 5) a geometric measure being performed of the distance and of the parallelism of the shoulders (14), and then imposing a pitch angle di each servo-assisted tail plane (3) obtaining the correct angle of attack of the central wing section (13), thereby performing the same function of the length change of the rear bridles (11, 12), in the same way a geometric measure being performed of the distance and of the parallelism of the shoulders (14), and then imposing a roll angle for each servo-assisted tail plane (3) obtaining the correct angle of attack of each shoulder (14), allowing to modify the shape of the wing (1), thereby performing the same function of the asymmetrical or shape change of the arc-type wing (1).

3. Method according to claim 1 or 2, **characterized in that** the detecting system (4) comprises a micro-camera (41) and a target (42).

4. Method according to claim 1, 2 or 3, **characterized in that characterized in that** the detecting system (5) comprises an ultrasound sensor (51) and a RF module for receiving and transmitting radio-frequency radio signals.

5. Method according to any one of the previous claims, **characterized in that** each panel (2) is equipped with an air brake (21) actuated depending on parameters measured through the detecting system (4, 5).

6. Method according to claim 5, **characterized in that** the air brake (21) is a spoiler.

## Patentansprüche

1. Methode für die Bestimmung der Form eines bogenförmigen Flügels (1) mit hoher aerodynamischer Effizienz in Echtzeit, der genannte Flügel (1) ist durch einen zentralen Bogenabschnitt (13) geformt, der mit einem Paar Mitnehmern (11, 12) durch ein Schulterpaar (14) verbunden ist, mit einem Erfassungssystem (4, 5), das dazu dient, den Unterschied der bedeutenden Maße (d1-d1'), (d2-d2'), zu messen, um in Echtzeit die Flügelform (1) zu bestimmen, das Erfassungssystem (4, 5) ist in den Tafeln (2) enthalten, die an jeder Schulter (14) befestigt sind, die genannte Methode schließt folgende Phasen ein:
- Messung in Echtzeit durch das genannte Erfassungssystem (4, 5) des Maßunterschiedes, (d1-d1'), (d2-d2'), der bedeutenden Parameter für die Formänderung des Flügels (1), die genannte Messphase wird durch Zielvorrichtungen (41) ausgeführt, die an einer der beiden Tafeln (2) montiert sind und dazu dienen, eine Zielscheibe (42) anzusteuern, die an der zweiten Tafel (2) angebracht ist; und
- Berechnung, durch den genannten Unterschied, der entsprechenden Verschiebungen der beiden Schultern (14) und, durch die Verwendung der Bremsvorrichtungen (21), Korrektur der Einstellung des bogenförmigen Flügels (1), indem dieser wieder in maximale Effizienzbedingungen versetzt wird, die genannten Bremsvorrichtungen (21) erzeugen eine Widerstandskraft, die es ermöglicht, ein nutzbares Schlingermoment einzuführen, um die Steuerreaktivität des bogenförmigen Flügels (1) wiederherzustellen.

2. Methode gemäß Patentanspruch 1, die **dadurch gekennzeichnet ist, dass** das genannte Erfassungssystem (4, 5) den bogenförmigen Flügel (1) steuert, indem es sowohl am Anschlusswinkel des zentralen Bogenabschnitts (13) als auch an den beiden Schultern (14) durch das Erfassungssystem (4, 5) eingreift, wobei eine geometrische Messung des Abstandes und der Parallelität der Schultern (14) ausgeführt wird, und daher ein Nickwinkel jeder servounterstützten Endfläche (3) auferlegt wird, sodass der korrekte Anschlusswinkel des zentralen Bogenabschnitts (13) erhalten wird, auf die gleiche Weise wird diese Funktion der Änderung der Länge der hinteren Mitnehmer (11, 12) ausgeführt, auf die gleiche Weise wird eine geometrische Messung des Abstandes und der Parallelität der Schultern (14) ausgeführt und daher ein Kippwinkel für jede servounterstützte Endfläche (3) auferlegt, sodass der korrekte Anschlusswinkel jeder Schulter (14) erhalten wird und es ermöglicht wird, auf diese Weise diese Funktion der asymmetrischen Änderung oder der Formänderung des bogenförmigen Flügels (1) auszuführen.

3. Methode gemäß Patentanspruch 1 oder 2, die **dadurch gekennzeichnet ist, dass** das Erfassungssystem (4) eine Mikrokamera (41) und eine Zielscheibe (42) enthält.

4. Methode gemäß Patentanspruch 1, 2 oder 3, die **dadurch gekennzeichnet ist, dass** das Erfassungssystem (5) einen Ultraschallsensor (51) und ein RF-Modul für den Sende-Empfang von Funkfrequenzsignalen enthält.

5. Methode gemäß einem der vorhergehenden Patentansprüche, die **dadurch gekennzeichnet ist, dass** jede Tafel (2) mit einer Aerobremse (21) ausgestattet ist, die je nach den Parametern aktiviert wird, die durch das Erfassungssystem (4, 5) gemessen wurden.

6. Methode gemäß Patentanspruch 5, die **dadurch gekennzeichnet ist, dass** die Aerobremse (21) ein Spoiler ist.

## Revendications

1. Méthode pour déterminer en temps réel la forme d'une aile en arc (1) à efficacité aérodynamique élevée ; l'aile (1) est formée d'un tronçon d'arc central (13) qui est relié à un couple de brides (11, 12) à travers un couple d'épaulements (14) ; la méthode comprend un système de détection (4, 5) apte à mesurer la différence de valeurs significatives (d1-d1'), (d2-d2'), pour déterminer en temps réel la forme de l'aile (1) ; le système de détection (4, 5) est logé à l'intérieur de panneaux (2) qui sont fixés à chaque épaulement (14) ; cette méthode est composée des phases suivantes :
- mesurer en temps réel, à travers le système de détection (4, 5), la différence des valeurs (d1-d1'), (d2-d2') correspondant à des paramètres indiquant la variation de la forme de l'aile (1) ; cette phase de mesure est effectuée à travers des moyens de pointage (41) qui sont montés sur l'un des deux panneaux (2) et sont en mesure de pointer une cible (42) située sur le second panneau (2) ; et
- calculer, à travers cette différence, les déplacements relatifs des deux épaulements (14) mais aussi corriger, à travers l'utilisation de moyens de freinage (21), l'assiette de l'aile en arc (1) en la ramenant en conditions d'efficacité maximale ; les moyens de freinage (21) engendrent une force résistante qui permet d'introduire un moment de lacet utile pour rétablir la réactivité de manoeuvre de l'aile en arc (1).

2. Méthode, selon la revendication 1, **caractérisée en ce que** le système de détection (4, 5) manoeuvre l'aile en arc (1) en agissant aussi bien sur l'angle d'attaque du tronçon d'aile central (13) que sur celui des deux épaulements (14) ; le système de détection (4, 5) permet d'effectuer une mesure géométrique de la distance et du parallélisme des épaulements (14) : on impose donc un angle de tangage de chaque plan de queue à commande assistée (3) pour obtenir l'angle d'attaque correct du tronçon d'aile central (13) ; on réalise ainsi la fonction de changement de longueur des brides arrière (11, 12) puis on effectue une mesure géométrique de la distance et du parallélisme des épaulements (14) en imposant un angle de roulis pour chaque plan de queue à commande assistée (3) et on obtient l'angle d'attaque correct de chaque épaulement (14), ce qui permet de modifier la forme de l'aile (1), en réalisant la fonction de changement asymétrique ou de forme de l'aile en arc (1).

3. Méthode, selon la revendication 1 ou 2, **caractérisée en ce que** le système de détection (4) comprend une micro-caméra (41) et une cible (42).

4. Méthode, selon la revendication 1, 2 ou 3, **caractérisée en ce que** le système de détection (5) comprend un capteur à ultrasons (51) et un module RF d'émission-réception de signaux radio sur fréquence radio.

5. Méthode selon l'une des revendications précédentes, **caractérisée en ce que** chaque panneau (2) est doté d'un aérofrein (21) actionné selon les paramètres mesurés par le système de détection (4, 5).

6. Méthode, selon la revendication 5, **caractérisée en ce que** l'aérofrein (21) est un déporteur.
